Europäisches Patentamt

European Patent Office

Office européen des brevets

(11) Veröffentlichungsnummer: **0 351 807**

**A1**

(12) **EUROPÄISCHE PATENTANMELDUNG**

(21) Anmeldenummer: **89113210.2**

(22) Anmeldetag: **19.07.89**

(51) Int. Cl.⁴: **G01S 15/93**

(30) Priorität: **22.07.88 DE 3824947**

(43) Veröffentlichungstag der Anmeldung:
**24.01.90 Patentblatt 90/04**

(84) Benannte Vertragsstaaten:
**DE FR GB IT NL**

(71) Anmelder: **SCHOELLER
TRANSPORTAUTOMATION GmbH
Kaiserstrasse 100
D-5120 Herzogenrath 3(DE)**

(72) Erfinder: **Schoeller, Manfred
Eberburgweg 79
D-5100 Aachen(DE)**

(74) Vertreter: **König, Werner, Dipl.-Ing.
Habsburgerallee 23-25
D-5100 Aachen(DE)**

(54) **Verfahren zur Kollisionsverhütung bei automatischen Fahrzeugen, insbesondere in fahrerlosen Transportsystemen.**

(57) Bei einem Verfahren zur Kollisionsverhütung bei automatischen Fahrzeugen, insbesondere in fahrerlosen Transportsystemen, bei dem ein Ultraschallimpuls abgesandt und die Zeit bis zum Eintreffen des Echos für eine Abstandsmessung ausgewertet wird, werden Ultraschallimpulse zur Fahrbahn des Fahrzeugs abwärts geneigt ausgesandt. Der untere Bereich der Schallkeule wird unter einem Abschattungswinkel von mindestens 30° gegenüber der Waagerechten abgesperrt und damit abgeflacht. Es kann mit Frequenzen des Ultraschalls von unter 100 kHz, vorzugsweise von 20 bis 40 kHz, gearbeitet werden. Es kann eine Bodenentfernung definiert werden, welche bei der kürzesten Entfernung eines Gegenstandes in Bewegungsrichtung vor dem Fahrzeug, in der ein Hindernis von 1 cm Höhe noch erfaßt wird, die Entfernung zwischen diesem Hindernis und dem Ultraschall-Sensor bezeichnet. Alle Gegenstände die in einer kürzeren als der Bodenentfernung ein- oder mehrmals von der Schallkeule erfaßt werden, werden zur Steuerung der Fahrzeuggeschwindigkeit bzw. von Notstops identifiziert.

Die Erfindung betrifft ein Verfahren zur Kollisionsverhütung bei automatischen Fahrzeugen, insbesondere in fahrerlosen Transportsystemen, bei dem Ultraschallimpulse von dem Fahrzeug ausgesandt und die Zeit bis zum Eintreffen des Echos für eine Abstandsmessung ausgewertet wird.

Für den Betrieb automatischer Fahrzeuge, insbesondere sogenannter fahrerloser Transportsysteme (FTS), werden einige Vorkehrungen für die Kollisionsverhütung benötigt.

So sind mechanische Auffahrsicherungen bekannt, die Schutzbügel aus einem flexiblen Material aufweisen, welche im Falle einer Kollision nachgeben und hierdurch zugleich ein Stopsignal für die Fahrzeugsteuerung erzeugen.

Bei der Verwendung solcher Auffahrsicherungen ist es nachteilig, daß sie das Fahrzeug unförmig und voluminös machen. Auch bei langsamer Fahrt (Schleichgang), bei der der Bremsweg sehr gering ist, muß dennoch der durch die Auffahrsicherung gegebene Abstand von allen Gegenständen, Personen und anderen Fahrzeugen im Fahrbereich eingehalten werden. Bei Fahrzeugen, die Fahrbewegungen in mehreren Richtungen zulassen, verhindert die mechanische Auffahrsicherung den Zugang von Bedienungspersonen zum Fahrzeug bzw. erschwert ihn. Eine Rundumsicherung ist auf diese Weise praktisch nicht möglich. Da bei wachsender Fahrzeuggeschwindigkeit der Bremsweg im Quadrat zunimmt, müßten bei Verwendung mechanischer Auffahrsicherungen diese so dimensioniert wer den, daß sie aus verkehrstechnischen Gründen nicht mehr räumlich untergebracht werden könnten. Außerdem können derartige Schutzbügel in Schwingungen versetzt werden, die grundlose Notstops auslösen können. Für autonom navigierende Fahrzeuge, welche nicht an eine induktive, kapazitive oder optische Leitspur gebunden sind, sollte neben der Auffahrsicherung nach vorn eine Sicherung des seitlichen Sicherheitsabstandes am Fahrbahnrand durchgeführt werden. Diese wiederum würde bei Verwendung mechanischer Auffahrsicherungen für das betreffende Fahrzeug erhebliche Einschränkungen im Einsatz mit sich bringen.

Es sind darüber hinaus zur Kollisionsverhütung auch Lichtschrankensysteme bekannt geworden, die einen über Spiegel um das Fahrzeug herumgeführten Lichtstrahl erzeugen. Eine Unterbrechung des Lichtstrahls führt dann zu Notstops des Fahrzeugs.

Nachteilig ist dabei, daß der Lichtstrahl keine Sicherung im Bereich zwischen 10 und 30 cm über der Fahrbahn ermöglicht. Überdies müssen solche Spiegelsysteme eindrückbar und damit teuer sein. Verschmutzungen können zu Störungen führen. Verformungen der Spiegelsysteme bewirken unbegründet Notstops.

Es sind auch bereits Laser-Abstandsmeßsysteme bekannt, bei denen über einen oszillierenden Spiegel ein Laserstrahl in Meßrichtung rasch hin und her bewegt wird. Durch Lichtlaufzeitmessung wird der Abstand reflektierender Gegenstände überwacht. Diese Systeme sind kostenaufwendig. Sie überwachen ebenfalls nur auf einer ganz bestimmten Ebene, nicht aber im Bereich zwischen 10 und 30 cm Höhe über dem Boden. Verschmutzung der Spiegel oder rotierenden Prismen führt zur Schwächung des Laserstrahls und insbesondere auch des reflektierten Lichts. Die Erkennung schlecht reflektierender Hindernisse ist nicht ausreichend zuverlässig gewährleistet.

Schließlich ist die Verwendung von Ultraschall zur Abstandssicherung bekannt. Dabei werden Schallimpulse ausgesandt, und es wird die Zeit ausgewertet, die bis zum Eintreffen des Echos vergeht. Bei den bekannten Systemen liegt die Meßrichtung etwa parallel zur Fahrbahn. Wenn eine vorgegebene Entfernung zu einem Schallreflektor, bei dem es sich um Gegenstände, Personen, andere Fahrzeuge usw. handeln kann, unterschritten wird, so löst das System Notstop aus. Üblicherweise hat dabei die Schallkeule vertikal einen Öffnungswinkel von 15 bis 30°, horizontal von 15 bis 180°. Im Gegensatz zu dem stark gebündelten Licht- oder Laserstrahl kann daher. eine Höhe von 20 bis 50 cm über dem Boden überwacht werden. Derartige Ultraschallabstandssicherungssysteme sind insbesondere bekannt für die Rückraumsicherung bei Lastkraftfahrzeugen sowie auch als Einparkhilfen bei Personenkraftwagen als Sicherungshilfe für den Fahrer.

Bei automatischen Fahrzeugen hat die Abstandssicherung durch die bekannten Ultraschallsysteme jedoch eine Reihe von Unsicherheitsfaktoren. Vor allem besteht eine Unsicherheit in der Art der Reflektion von Ultraschall durch alle denkbaren Gegenstände und insbesondere Personen im Fahrbereich. Lockere Gewebe oder Watte oder Wollpullover haben schlechte Reflektionseigenschaften. Deshalb ist die Erkennung von Personen durch die bisher bekannten Systeme nicht hinreichend gesichert.

Es kommt hinzu, daß die Intensität der Schallimpulse an den Rändern der Schallkeule absinkt. Dadurch entsteht bei der bisher allgemein üblichen Messung parallel zur Fahrbahnoberfläche eine besonders gefährdete Zone in Bodennähe. Einerseits muß die Schallkeule so hoch angebracht und so geformt werden, daß Löcher und Schwellen oder Ritzen in der Fahrbahn nicht erfaßt werden, da hierdurch ja unberechtigte Notstops ausgelöst würden. Andererseits muß aber in einer Höhe von 10 cm über dem Boden ein schlechter Reflektor klar erkannt werden. Dies kann mit den bekannten Systemen nicht mit hinreichender Sicherheit bewirkt werden.

Versuche haben gezeigt, daß bei Ultraschallfrequenzen bis 80 kHz, die eine Schallkeule mit noch ausreichend großem Öffnungswinkel ermöglichen, eine filzbespannte Kugel im Durchmesser von 15 cm, die für Vergleichsmessungen als Reflektor üblicherweise verwendet wird, nicht erkannt wird, wenn alle Einstellungen so vorgenommen werden, daß nicht zugleich auch für das Fahrzeug unerhebliche Ritzen oder Kanten im Boden erkannt werden. Die Versuche haben weiter gezeigt, daß bei Ultraschallfrequenzen über 100 kHz eine solche Unterscheidung möglich ist. Jedoch liefern solche Frequenzen Schallkeulen mit sehr geringem Öffnungswinkel. Der Aufwand zur Herstellung einer Absicherung im Raume von 180° horizontal oder darüber wird unvertretbar hoch.

Die Aufgabe der vorliegenden Erfindung besteht nun darin, die Nachteile der bisher angewandten Verfahren der eingangs erwähnten Art zu vermeiden und ein Verfahren zur Kollisionsverhütung anzugeben, das mit einem geringen apparativen Aufwand realisiert werden kann und zudem ein zuverlässiges Erfassen aller tatsächlichen Hindernisse erlaubt, gleichzeitig aber für das betreffende Fahrzeug unbedeutende Ritzen oder Kanten am Boden ignoriert.

Diese Aufgabe wird bei einem Verfahren der eingangs erwähnten Art erfindungsgemäß dadurch gelöst, daß die Ultraschallimpulse zur Fahrbahn des Fahrzeugs hin abwärts geneigt ausgesandt werden, wobei der untere Bereich der Schallkeule unter einem Abschattungswinkel von mindestens 30° gegenüber der Horizontalen abgesperrt und damit abgeflacht wird. Bei diesem Verfahren wird sichergestellt, daß in Bewegungsrichtung vor dem Fahrzeug nicht die unteren Randbereiche der Schallkeule zur Erfassung bodennaher Hindernisse herangezogen werden. Dadurch wird in der besonders gefährdeten Zone in Bodennähe eine sichere Erfassung ermöglicht.

Gemäß einem weiteren Vorschlag der Erfindung kann mit Frequenzen unter 100 kHz gearbeitet werden, bevorzugt im Bereich zwischen 20 und 40 kHz.

Gemäß einem weiteren Vorschlag kann das erfindungsgemäße Verfahren so ausgeführt werden, daß ausgehend vom Sender die kürzeste Entfernung = Bodenentfernung eines Gegenstandes in Bewegungsrichtung vor dem Fahrzeug bestimmt wird, in der ein Ultraschallreflektor in Bodenhöhe (Hindernis von etwa 1 cm Höhe) noch erfaßt werden kann, und daß dann alle Gegenstände, die in einer kürzeren als der Bodenentfernung ein- oder mehrmals erfaßt werden, zur Steuerung der Fahrzeuggeschwindigkeit bzw. eines Fahrzeugstops identifiziert werden. Dies hat zur Folge, daß Ritzen, Kanten und Hindernisse mit einer Höhe von weniger als einen Zentimeter über der Fahrbahn ignoriert werden, wodurch unberechtigte Stops ausgeschlossen werden. Gerät ein Gegenstand oder eine Person in die Erkennungszone, so kann anstelle eines Notstops auch ein Umschalten in Schleichgang ausgelöst werden. Die Bewegung in Schleichgang kann dann durch eng bemessene mechanische Sicherungen nach Art von Schließkantensicherungen gewährleistet werden. Aufgrund der geringen Entfernung können die fortlaufenden Messungen in einem zeitlichen Abstand von nur 20 bis 40 ms ausgeführt werden. Sofern dies aufgrund besonderer Gegebenheiten wünschenswert erscheint, kann die Bodenentfernung selbstverständlich auch anhand eines Hindernisses definiert werden, dessen Höhe über oder unter 1 cm liegt.

Im folgenden Teil der Beschreibung wird das erfindungsgemäße Verfahren anhand einer Schemazeichnung beschrieben.

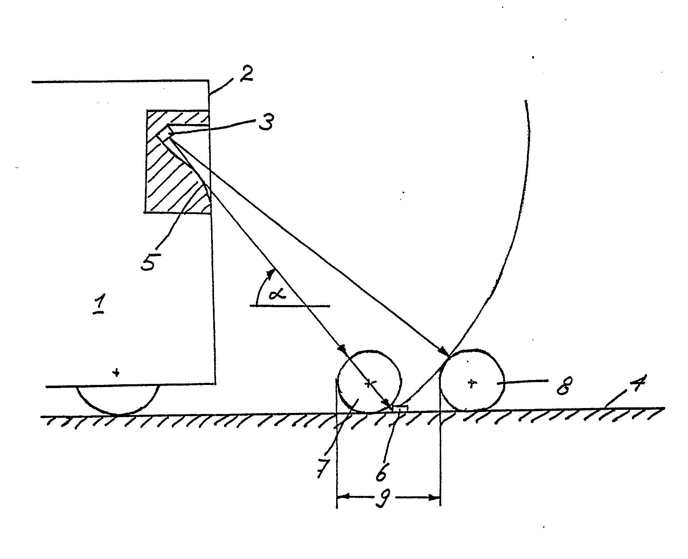

Ein automatisches Fahrzeug 1 ist an seiner Frontseite 2 mit einem Ultraschallsensor 3 versehen. Das Fahrzeug 1 bewegt sich auf einer Fahrbahn 4 in der Figur nach rechts. Der von dem Ultraschallsensor 3 ausgesandte Ultraschall bildet eine Schallkeule, die in Richtung auf die Fahrbahn 4 nach vorn abwärts geneigt ist. Der untere Bereich der Schallkeule wird durch eine Ablenkfläche 5 definiert. Diese Ablenkfläche 5 schließt den unteren Randbereich der Schallkeule im wesentlichen aus. Vorteilhaft ist eine parabelförmige Fläche, welche eine Ablenkung der Schallkeule in eine Richtung parallel zur Keulenachse bewirkt. Hierdurch wird in der abgeflachten unteren Randzone ein vergleichsweise hoher Schalldruck erzielt, der ein gutes Echo auch in der Randzone garantiert.

Die Ablenkfläche 5 definiert für die Schallkeule einen Abschattungswinkel $\alpha$ von 35°. Auf der Fahrbahn 4 liegt vor dem Fahrzeug 1 ein Hindernis 6 mit einer Höhe von 1 cm. In der Position, in der die Schallkeule bei Vorwärtsbewegung des Fahrzeugs 1 gerade noch das Hindernis 6 trifft, ergibt sich zwischen Ultraschallsensor 3 und Hindernis 6 ein Abstand, der nachstehend als Bodenentfernung bezeichnet wird.

Die von dem Ultraschallsensor empfangenen Echos werden so ausgewertet, daß Abstände zu Hindernissen von mehr als Bodenentfernung ignoriert werden, daß der Ultraschallsensor also Hindernisse mit einer Höhe von weniger als 1 cm nicht verarbeitet.

In der Zeichnung ist eine Kugel 7 in der Position dargestellt, in der sie von der Schallkeule gerade noch erfaßt wird. Diese Kugel 7 ist ein vom Berufsgenossenschaftlichen Institut für Arbeitssicherheit eingeführter Normal-Reflektor. Er ist mit Filz bespannt und hat einen Durchmesser von 15 cm. Eine solche Kugel dient als Bezugsmeßgröße. Weiter rechts ist in der Zeichnung eine gleich ausgebildete Kugel 8 abgebildet, die in der dargestellten Position soeben in den Bereich eintritt, in der ihr Abstand zum Ultraschallsensor 3 kleiner ist als die Bodenentfernung, also in eine Position, in der die Kugel 8 in den Erfassungsbereich des Ultraschallsensors 3 gelangt. Der Abstand zwischen den Kugeln 8 und 7 definiert für die Kugeln 7 und 8 eine Erkennungszone 9. Lage und Größe der Erkennungszone hängen von den jeweiligen Abmessungen des Hindernisses ab.

## Ansprüche

1. Verfahren zur Kollisionsverhütung bei automatischen Fahrzeugen, insbesondere in fahrerlosen Transportsystemen, bei dem Ultraschallimpulse von dem Fahrzeug ausgesandt und die Zeit bis zum Eintreffen des Echos für eine Abstandsmessung ausgewertet wird, **dadurch gekennzeichnet,** daß die Ultraschallimpulse zur Fahrbahn des Fahrzeugs hin abwärts geneigt ausgesandt werden, wobei der untere Bereich der Schallkeule unter einem Abschattungswinkel von mindestens 30° gegenüber der Horizontalen abgesperrt und damit abgeflacht wird.

2. Verfahren nach Anspruch 1, dadurch gekennzeichnet, daß die Frequenzen des verwendeten Ultraschalls unter 100 kHz liegen.

3. Verfahren nach Anspruch 2, dadurch gekennzeichnet, daß die Frequenzen des verwendeten Ultraschalls zwischen 20 und 40 kHz liegen.

4. Verfahren nach einem der vorhergehenden Ansprüche, dadurch gekennzeichnet, daß ausgehend vom Sender die kürzeste Entfernung = Bodenentfernung eines Gegenstandes in Bewegungsrichtung vor dem Fahrzeug bestimmt wird, in der ein Ultraschallreflektor in Bodennähe (Hindernis von etwa 1 cm Höhe) noch erfaßt werden kann, und daß dann alle Gegenstände, die in einer kürzeren als der Bodenentfernung ein-oder mehrmals erfaßt werden, zur Steuerung der Fahrzeuggeschwindigkeit bzw. eines Fahrzeugstops identifiziert werden.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | PATENT ABSTRACTS OF JAPAN, Band 6, Nr. 225 (P-154)[1103], 10. November 1982; & JP-A-57 128 867 (NIPPON DENSO K.K.) 10-08-1982 * Zusammenfassung * | 1 | G 01 S 15/93 |
| A | IDEM --- | 2-4 | |
| Y | GB-A-2 140 918 (TOMNEY et al.) * Figuren; Seite 1, Zeile 124 - Seite 2, Zeile 41 * --- | 1 | |
| A | WESCON 86/CONFERENCE RECORD, Band 30, 18. - 20. November 1986, Seiten SS/1-9, Los Angeles, CA, US; T. LANCASTER: "SONALARM: A vehicle sonar obstacle detection unit" * Seite SS/1-3, rechte Spalte * --- | 2-4 | |
| A | GB-A-2 157 436 (BYGG-OCH) * Figuren; Seiten 1,2 * --- | 1-4 | RECHERCHIERTE SACHGEBIETE (Int. Cl.5) |
| A | US-A-3 394 342 (WALKER) * Figuren * ----- | 1-4 | G 01 S<br>G 05 D |

Der vorliegende Recherchenbericht wurde für alle Patentansprüche erstellt

| Recherchenort | Abschlußdatum der Recherche | Prüfer |
|---|---|---|
| DEN HAAG | 17-10-1989 | DEVINE J.J |